# EUROPEAN PATENT SPECIFICATION

(11) **EP 3 943 820 B1**
(45) Date of publication and mention of the grant of the patent: **01.05.2024**
(21) Application number: 20187480.7
(22) Date of filing: 23.07.2020
(51) Int. Cl.: F24D 3/18, F24D 19/10, F24D 15/04, F25B 6/02, F25B 5/02, F25B 13/00, F25B 41/20, F25B 41/39, F25B 25/00

(54) **METHOD AND HEATING SYSTEM FOR HEATING AT LEAST TWO DIFFERENT SPACES INSIDE A BUILDING USING A DUAL MODE OPERATION HEAT PUMP**
VERFAHREN UND HEIZSYSTEM ZUM HEIZEN VON MINDESTENS ZWEI VERSCHIEDENEN RÄUMEN IM INNEREN EINES GEBÄUDES UNTER VERWENDUNG EINER WÄRMEPUMPE MIT ZWEI BETRIEBSARTEN
PROCÉDÉ ET SYSTÈME DE CHAUFFAGE POUR CHAUFFER AU MOINS DEUX ESPACES DIFFÉRENTS À L'INTÉRIEUR D'UN BÂTIMENT AU MOYEN D'UNE POMPE À CHALEUR À FONCTIONNEMENT EN MODE DOUBLE

(43) Date of publication of application: 26.01.2022
(73) Proprietor: Mitsubishi Electric Corporation, Tokyo 100-8310 (JP); Mitsubishi Electric R&D Centre Europe B.V., Livingston EH54 5DJ (GB)
(72) Inventor: WU, Duan, Livingston EH54 5DJ (GB); SALVADOR, Michael, Livingston EH54 5DJ (GB)
(74) Representative: Pfenning, Meinig & Partner mbB

(56) References cited:
- WO-A1-2018/154534
- US-A1- 2016 033 145

## Description

The present invention relates to a method for heating at least two different spaces in a building using a dual-mode heat.

Energy consumption in houses accounts for a major fraction of C0₂ emission produced by humans. In order to further decarbonise this sector zero energy houses (ZEHs) will become paramount in the future. Heat pumps represent a preferred solution for supplying space heating and domestic hot water due to their renewable nature. Typically, the air-source heat pump heat circuit consists of a feed-in pipe, and heat emitters which are installed in each room for releasing heat, compensating for heat loss to the ambient. During the night, occupants are usually in bedrooms, but the heating system still supplies heat to all rooms, even if such heating is unnecessary in unoccupied rooms, thus causing unnecessary energy consumption. Further, during the day time, occupants are typically absent from the house. Although heat pumps have a higher coefficient of performance (COP) during this period, demand for space heating is reduced due to the higher ambient temperature in comparison to the night time. Thus, during the day time, the heat pump will only run under partial load with a low COP.

US 2016/033145 A1 describes a method for transferring thermal energy between areas of a structure so as to maintain occupant comfort while minimizing the difference between indoor and outdoor temperatures, thereby minimizing thermal losses from the structure.

The problem to be solved by the present invention is thus to provide a method for heating at least two separate spaces in a building which can achieve an increased COP without requiring the installation of additional heat reservoirs.

The problem is solved by a method for heating at least two separate spaces in a building according to claim 1.

Advantageous embodiments of the method are described in the respective dependent claims.

According to the present invention, a method for heating at least two separate spaces in a building using a heating system is provided, wherein the heating system comprises a dual-mode heat pump which is operable in two alternative modes, one mode being a water-source mode and another being an air-source mode. In the water-source mode, the heat pump transfers heat from at least a first space of the at least two separate spaces to at least a second space of the at least two separate spaces. In the air-source mode, the heat pump transfers heat from the outside to the at least two separate spaces.

A space in a building in the sense of the application is a part or division of a building enclosed by walls, floor and ceiling. For example, a room is a space of a building in the sense of the application. In addition, the designation that two or more spaces of a building are separate from one another can advantageously imply that no or very little heat transfer occurs via the air inside the building between the two or more separate spaces, where most heat transfer in buildings is usually due to convection.

In the application, the air-source mode is also referred to as air-source heating mode and the water-source mode is also referred to as heat recovery mode.

The method according to the invention allows switching between different heating sources, namely between outside air and air in at least one space of the two separate spaces of the building. The use of the thermal mass of the building as a heating source allows increasing the COP of the heating system without requiring the installation of an additional heat storage volume. Furthermore, using both modes the heat pump will operate at a higher overall COP compared to single mode heat pumps.

According to the invention, the method comprises that during a period of a day, in which an ambient temperature is higher than a daily mean temperature, the air-source mode is used to heat at least two separate spaces of the building.

In an additional preferred embodiment of the invention, the method further comprises that during daytime, which is a period of a day between sunrise and sunset, the air-source mode is used to heat at least two separate spaces of the building.

Preferably, the method further comprises that during a period of the day, in which an ambient temperature is lower than the daily mean temperature, it is detected whether a person is present in the at least one space of the at least two separate spaces, and in a case in which no person is detected the heat pump is switched to operate in the water-source mode.

The method can preferably further comprise, that during night time, which is a period of a day between sunset and sunrise, it is detected whether a person is present in the at least one space of the at least two separate spaces, and in a case in which no person is detected the heat pump is switched to operate in the water-source mode.

Individual embodiments and aspects of the method according to the invention will be illustrated hereinafter as examples by way of merely schematic drawings. In the drawings:
Fig. 1 shows a circuit diagram of an air-source heat pump known in the prior art,
Fig. 2(a) shows a plot of the ambient temperature over the course of 24 h, Fig. 2(b) shows a plot of the heat supplied by the heat pump of Fig. 1 over the course of 24h,
Fig. 2(c) shows the electrical consumption of the heat pump of Fig. 1 over the course of 24h,
Fig. 2(d) shows a plot of the COP of the heat pump of Fig. 1 over the course of 24h,
Fig. 3(a) shows a circuit diagram of an example of a heating system according to the present invention,
Fig. 3(b) shows a table of the actuators' operational mode with respect to the actuators shown in Fig. 3(a),
Fig. 3(c) shows a sketch of a building being heated by a heat pump of Fig. 3(a) using an air-source mode,
Fig. 3(d) shows a sketch of a building being heated by a heat pump of Fig. 3(a) using a water-source mode,
Fig. 4(a) shows a graph of the COP over the time of day for a method using a heating system according to the invention and a method using a conventional heating system,
Fig. 4(b) shows a graph of the electric consumption as a function of the time of day using a heating system according to the invention and a method using a conventional heating system, and
Fig. 5 shows a flow chart of an example of the method according to an embodiment of the present invention.

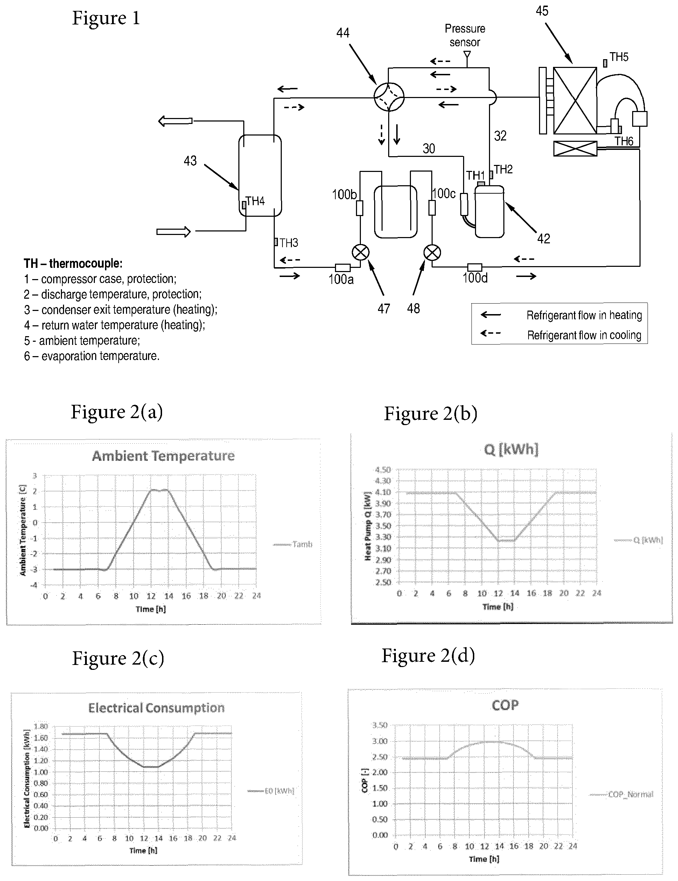

Figure 1 shows a circuit diagram of a refrigerant circuit of an air-source heat pump system known in the prior art. The system can be charged with a refrigerant such as R410A, R32 or other suitable heat transfer fluids. During a heating operation, a pipe (30) connecting a four way valve (44) and an input port of a compressor (42) corresponds to a suction line of a compressor (42), i.e. a low pressure side of the compressor, and a pipe (32) connecting an output port of the compressor (42) and the four way valve (44) corresponds to a discharge line which is the high pressure output from the compressor (42). On the compressor, a first thermocouple (TH1) monitors the temperature of the compressor case. A second thermocouple (TH2) is disposed on the discharge line to monitor the temperature of the discharged high pressure refrigerant.

After having been discharged from the compressor (42) the refrigerant subsequently enters a four way valve (44) which can be switched to change from a heating operation to a cooling operation of the air-source heat pump. A pressure sensor disposed on the discharge line between the compressor (42) and the four way valve (44) monitors the pressure of the refrigerant discharged from compressor.

After the refrigerant has passed the four way valve (44) the refrigerant reaches a first heat exchanger (43) which is formed as a plate heat exchanger in the shown example. During heating operation, the refrigerant changes phase in the first heat exchanger from the gaseous to the liquid phase, i.e. is condensed. In the first heat exchanger (43), the latent heat is released by the refrigerant to the water. A third thermocouple (TH3) which is disposed on a pipe connecting the first heat exchanger and a first strainer (100a) monitors the temperature of the condensed refrigerant when the heat pump system is in the heating operation. A fourth thermocouple (TH4) located on the input port of the water circuit during the heating operation detects the temperature of the water returning to the first heat exchanger.

The refrigerant discharged from the first heat exchanger (43) flows through the first strainer (100a) and enters a first expansion valve (47) where it is expanded resulting in a pressure decrease. Subsequently, the refrigerant flows through a second strainer (100b) and flows into a receiver. Upon being discharged from the receiver, the refrigerant flows through a third strainer (100c), and passes a second expansion valve (48) and a fourth strainer (100d). Subsequently, the refrigerant flows into a second heat exchanger (45), which is an air-refrigerant heat exchanger, where it absorbs heat from the air. The absorption of heat by the low pressure liquid leads to an evaporation of the liquid, i.e. a phase change from liquid to gas. A sixth thermocouple (TH6) is disposed at the second heat exchanger (45) to monitor the evaporation temperature of the refrigerant and a fifth thermocouple (TH5) is arranged close to the heat exchanger for monitoring the ambient temperature. The refrigerant gas then flows through the four way valve (44) back to the suction line of the compressor (42) for the next cycle. During a cooling operation, the four way valve is switched and the cycle of refrigerant flow reversed.

The graph in figure 2(a) depicts the ambient temperature of air over the course of 24h, i.e. a day. During the period of time from 19h to 9h, the ambient temperature is shown to be constantly -3°C. During the period of time from 9h to 19h, the temperature rises to a maximum at around 13h and decreases again afterwards to the constant value of -3°C.

The graph in figure 2(b) shows the heat supplied by the heat pump according to the prior art to the air in a building. It is assumed that the temperature inside a building, which is heated by said heat-pump, is constantly set to 21°C. Because of the temporal profile of the ambient temperature shown in figure 2(a), the demand for heat supplied by the heat pump is lower during the time period from 9h to 19h than during the time period from 19h to 9h.

Equally, the electrical consumption of the heating system which is shown in the graph in Figure 2(c) is reduced during the period of time from 9h to 19h.

Figure 2(d) shows the COP of the heat pump according to the prior art which is set to keep a building at a constant temperature of 21°C. The COP is increased during the period of time from 9h to 19h compared to the remaining hours of the day.

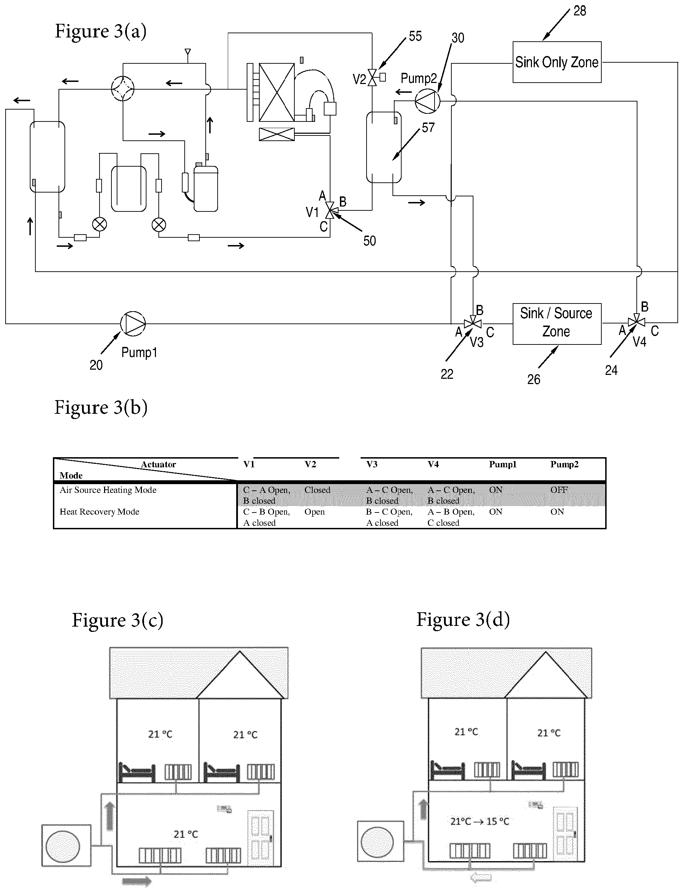

Figure 3(a) shows a circuit diagram of an example of a heating system using a dual-mode heat pump according to the present invention.

The heating system comprises a first circuit through which a first medium circulates, a second circuit through which a second medium circulates, a third circuit through which the second medium circulates. The first medium can be a refrigerant and the second medium can be heat transfer medium such as water. The first circuit includes the air-source heat pump circuit described above with respect to figure 1 and which further includes a first branching valve (50) which is provided on a pipe which connects the second expansion valve (48) and the second heat exchanger (45).

The first circuit further comprises a first bypass in which a third heat exchanger (57) and a valve (55) are sequentially connected by a pipe which connects the first branching valve (50) with a pipe which connects the second heat exchanger (45) and the compressor (42). The first branching valve (50) and the valve (55) can thus be used to bypass the second heat exchanger (45), which is an air-refrigerant heat exchanger.

The second circuit includes a loop in which the first heat exchanger (43), a first pump (20), a second branching valve (22), a fourth heat exchanger (26) and a third branching valve (24) are connected to one another by pipes.

Further, the second circuit comprises a third bypass which includes a fifth heat exchanger (28) and which connects a pipe between the first pump (20) and the second branching valve (22) with a pipe between the third branching valve (24) and the first heat exchanger (43).

The third circuit includes a loop in which the third heat exchanger (57), the second branching valve (22), the fourth heat exchanger (26), the third branching valve (24) and a second pump (30) are sequentially connected by pipes.

The shown heating system can for example be used to heat two separate rooms in a building, where the fourth heat exchanger (26) is provided in a first room and the fifth heat exchanger (28) is provided in a second room. In the air-source mode, the fourth and fifth heat exchangers (26, 28) are configured to operate as heat emitters. In the water-source mode, the fourth heat exchanger (26) is used to absorb heat from the first room and the fifth heat exchanger (28) serves as a heat emitter, thereby transferring heat from the first to the second room.

Figure 3(b) shows a table indicating the actuators' operational mode of the heating system according to Figure 3(a) during an air-source heating and a heat recovery mode, respectively. The operation during the two alternative modes will be described in the following. In the description of the operation, it is assumed that the fourth heat exchanger (26) is located in a first room of a building while the fifth heat exchanger (28) is located in a second room of a building. Further, the second heat exchanger (45) is assumed to be located outside the building.

### Air-source heating mode

During the air source heating mode, the refrigerant exchanges heat in the first heat exchanger (43) with the second medium, which can in particular be water, circulating in the second circuit.

In the first circuit, port B of the first branching valve (50) is closed such that the refrigerant, having passed through the expansion valve, enters the second heat exchanger (45) where it is evaporated by exchanging heat with ambient air. The refrigerant gas flows subsequently back to the suction line of the compressor (42) for the next cycle.

In the second circuit, the second medium is pumped by the first pump (20) to circulate in the second circuit. The second medium, which exchanged heat in the first heat exchanger (43) with the first medium, flows through the fourth and fifth heat exchanger (26, 28) in which the heat medium exchanges heat with the air in the first and second room.

During the air source heating mode, the second pump (30) in the third circuit is not operating and the port B in second and third branching valves (22, 24) is closed.

In the air-source mode, both rooms are heated by the heat pump which transfers heat from the outside to the fourth and fifth heat exchangers (26, 28) which are located in the first and second room, respectively.

### Heat recovery mode

To cause the heating system to operate in the water-source mode, which is the heat recovery mode, a controller switches the valves to the states shown in the table in Figure 3(b) and causes the second pump (30) to operate.

During the heat recovery mode, the refrigerant in the first circuit exchanges heat in the first heat exchanger (43) with the second medium, which can in particular be water, circulating in the second circuit.

In the first circuit, port A of the first branching valve (50) is closed such that the refrigerant, after having passed through the second expansion valve (48), enters the third heat exchanger (57) where it is evaporated by exchanging heat with the third medium circulating in the third circuit. The refrigerant gas flows subsequently back via the opened valve (55) to the suction line of the compressor (42) for the next cycle.

In the second circuit, the port A of the second branching valve (22) and port C of the third branching valve (24) being closed, the second medium, which is circulated through the second circuit by the first pump (20), flows through the fifth heat exchanger (28) where it exchanges heat with the air in the second space of the building. Subsequently, the second medium flows back to first heat exchanger (43) for the next cycle.

In the third circuit, the second heat medium, which is pumped by the second pump (30) to circulate in the third circuit, exchanges heat with the refrigerant in the third heat exchanger (57) and flows via the second branching valve (22) through the fourth heat exchanger (26) where it exchanges heat with the air in the first space. Subsequently, the second heat medium flows via the third branching valve back to the third heat exchanger (57) for the next cycle.

The heating system thus effectively transfers heat from the first room, in which the fourth heat exchanger (26) is located, to the second room in which the fifth heat exchanger (28) is located.

Figure 3(c) shows an example of a building having three rooms, i.e. separate spaces, which are heated using an air-source mode. Two of the rooms are bedrooms which are located on the first floor of the building while a third room is located on the ground floor. A heating system is provided with pipes connecting heat emitters in each of the three rooms with a heat pump system which is located outside the building. The temperature inside all three rooms is kept constant by the heating system at 21°C. As the arrows indicate, heat is transferred from the outside to all three rooms.

Figure 3(d) depicts an identical building as is shown in Fig. 3(c) which is heated using a water-source mode according to the present invention. In this mode, the third room is used as a heat reservoir, i.e. heat is transferred from the third room, which is located on the ground floor, to the two bedrooms, which are located on the first floor. Due to the heat transfer occurring during the operation of the heat pump in the water-source mode, the temperature in the third room, which is initially at 21°C, is reduced to 15°C while the temperature in the two bedrooms is kept constant at 21°C.

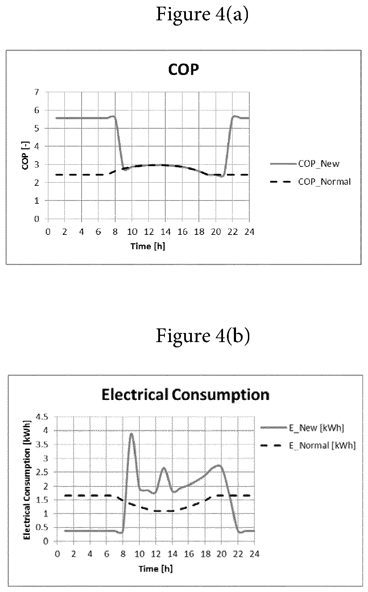

Figure 4(a) shows the graph where the broken line depicts the COP as a function of time of day for a heat pump according to an example of the present invention and the solid line the COP of a heat pump known in the cited prior art.

Between 9h and 21h the COP of the heat pump according to the invention is essentially identical to the COP of the heat pump known in the prior art. During this period of time the ambient temperature is higher than a daily mean temperature and both heat pumps are operated in an air-source mode, i.e. heat is transferred from the outside to at least two separate rooms in the building. This scenario is exemplarily shown in Figure 3(c) where all rooms are heated to 21°C.

Between 22h and 8h the COP of the heating system according to the invention is increased compared to the COP of a heating system using an air-source mode. During this period of time the ambient temperature is below a daily mean temperature and the heating system according to the invention is switched to a water-source mode. In the water-source mode heat is transferred from at least a fist space of a building to at least a second space of a building. This scenario is exemplarily shown in Fig. 3(d).

Further, in the water-source mode the third room is used as a heat reservoir which has an increased temperature compared to an ambient temperature during this time of day. Consequently, the COP of the heating system which comprises a heat pump operable in two different modes according to the invention is increased compared to the heating system using an air source mode.

Figure 4(b) shows a graph of the electrical consumption of an example of the heating system according to the invention. Between 21h and 8h the solid line shows that the consumption of the heating system according to the invention is reduced compared to the heating system known in the prior art which is indicated by the broken line.

From 9h to 19h, in the prior art case (indicated by the broken line), the heat pump consumes less electricity as the heat demand is lower and ambient temperature is higher than during the night time, i.e. during the period from 19h to 9h. In the case of the heating system according to the invention (indicated by the solid line), due to the thermal energy depletion in the source zone during the night time, the re-heating requires higher heat input from heat pump and this increases the electrical consumption. However, the overall electrical consumption is lower for the new system which has around 5% energy saving effect in comparison to the prior art case.

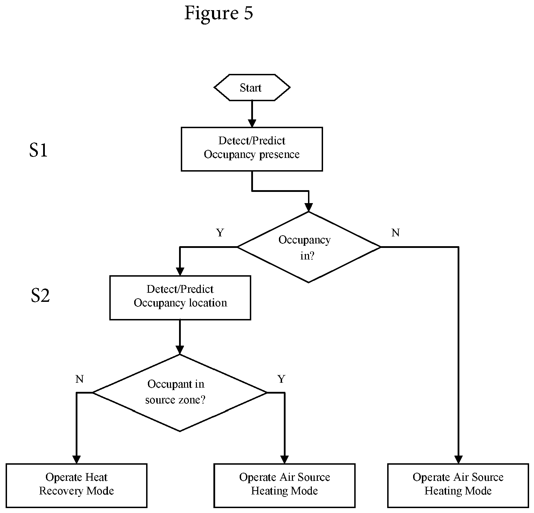

Figure 5 shows a flow chart of a method for controlling a heating system according to an embodiment of the present invention. In a first step (S1), the presence of a person in a building is detected, by using for example an occupancy detection sensor.

If no occupancy is detected, the heating system is configured to operate in an air source heating mode. If the occupancy of a person is detected, it is determined in a second step (S2) whether the person, for example an occupant, is located in a source zone, the source zone being a space of the building in which a heat exchanger is located which can serve either as a heat source or heat sink.

If it is determined that no person is present in the source zone, the controller causes the heating system to operate in a heat recovery mode. If it is determined that the person is present in the source zone, the controller causes the heating system to operate in an air-source heating mode.

## Claims

1. Method for heating at least two separate spaces in a building using a heating system,
wherein the heating system comprises a dual-mode heat pump operable in two alternative modes, one mode being a water-source mode and another mode being an air-source mode,
wherein in the water-source mode the heat pump transfers heat from at least a first of the at least two separate spaces to at least a second space of the at least two separate spaces, and
wherein in the air-source mode the heat pump transfers heat from the outside to the at least two separate spaces,
**characterised in that**
during a period of a day in which an ambient temperature is higher than a daily mean temperature, the air-source mode is used to heat the at least two separate spaces of the building.

2. Method according to claim 1, **characterised in that**
during a period of a day in which an ambient temperature is lower than the daily mean temperature, it is detected whether a person is present in the first space of the at least two separate spaces, and in a case, in which no person is detected, the heat pump is switched to operate in the water-source mode.

## Patentansprüche

1. Verfahren zum Erwärmen von mindestens zwei getrennten Räumen in einem Gebäude unter Verwendung eines Erwärmungssystems,
wobei das Erwärmungssystem eine Dualmodus-Wärmepumpe umfasst, die in zwei alternativen Modi betrieben werden kann, wobei ein Modus ein Wasserquellenmodus und ein anderer Modus ein Luftquellenmodus ist,
wobei die Wärmepumpe im Wasserquellenbetrieb Wärme von mindestens einem ersten der mindestens zwei getrennten Räume an mindestens einen zweiten Raum der mindestens zwei getrennten Räume überträgt, und
wobei die Wärmepumpe im Luftquellenbetrieb Wärme von außen an die mindestens zwei getrennten Räume überträgt,
**dadurch gekennzeichnet, dass**
während einer Zeitspanne eines Tages, in der eine Umgebungstemperatur höher ist als eine tägliche Durchschnittstemperatur, der Luftquellenmodus verwendet wird, um mindestens zwei getrennte Räume des Gebäudes zu erwärmen.

2. Verfahren nach Anspruch 1, **dadurch gekennzeichnet, dass**
während einer Zeitspanne eines Tages, in der eine Umgebungstemperatur niedriger als die tägliche Durchschnittstemperatur ist, erfasst wird, ob sich eine Person im ersten Raum der mindestens zwei getrennten Räume aufhält, und in einem Fall, in dem keine Person erfasst wird, die Wärmepumpe auf den Betrieb im Wasserquellenmodus umgeschaltet wird.

## Revendications

1. Procédé pour chauffer au moins deux espaces séparés dans un bâtiment à l'aide d'un système de chauffage,
dans lequel le système de chauffage comprend une pompe à chaleur bimode pouvant fonctionner dans deux modes différents, l'un étant un mode à source d'eau et l'autre un mode à source d'air,
dans lequel, dans le mode à source d'eau, la pompe à chaleur transfère la chaleur d'au moins un premier des au moins deux espaces séparés à au moins un deuxième espace des au moins deux espaces séparés, et
dans lequel, dans le mode à source d'air, la pompe à chaleur transfère la chaleur de l'extérieur vers les au moins deux espaces séparés,
**caractérisé en ce que**
pendant une période de la journée au cours de laquelle une température ambiante est supérieure à une température moyenne journalière, le mode à source d'air est utilisé pour chauffer les au moins deux espaces séparés du bâtiment.

2. Procédé selon la revendication 1, **caractérisé en ce que**
pendant une période de la journée au cours de laquelle une température ambiante est inférieure à une température moyenne journalière, il est détecté si une personne est présente dans le premier espace des au moins deux espaces séparés, et dans le cas où aucune personne n'est détectée, la pompe à chaleur est commutée pour fonctionner en mode à source d'eau.
